# EUROPEAN PATENT SPECIFICATION

(11) **EP 2 555 149 B1**
(45) Date of publication and mention of the grant of the patent: **23.05.2018**
(21) Application number: 11763063.2
(22) Date of filing: 31.03.2011
(51) Int. Cl.: H04H 60/15, G06Q 30/00

(54) **APPARATUS AND METHOD FOR THE COMPULSORY VIEWING OF ADVERTISEMENTS**
VORRICHTUNG UND VERFAHREN ZUR ZWANGSWEISEN ANZEIGE VON WERBEINHALTEN
APPAREIL ET PROCÉDÉ POUR LA VISUALISATION OBLIGATOIRE D'ANNONCES PUBLICITAIRES

(30) Priority: 24.08.2010 KR 20100082192; 21.06.2010 KR 20100058769; 02.04.2010 KR 20100030635
(43) Date of publication of application: 06.02.2013
(73) Proprietor: Samsung Electronics Co., Ltd., Gyeonggi-do 443-742 (KR)
(72) Inventor: HWANG, Sung-oh, Yongin-si Gyeonggi-do 448-712 (KR); SELEZNEV, Sergey Nikolayevich, Suwon-si Gyeonggi-do 443-727 (KR); SONG, Jae-yeon, Seoul 135-080 (KR); KANG, Bo-Gyeong, Seoul 130-080 (KR)
(74) Representative: HGF Limited
(86) International application number: PCT/KR2011/002252
(87) International publication number: WO 2011/122891

(56) References cited:
- JP-A- 2009 206 535
- JP-A- 2009 223 352
- KR-A- 20060 040 489
- KR-A- 20080 027 040
- KR-A- 20090 021 514
- US-A1- 2008 235 722
- US-A1- 2008 270 242
- US-A1- 2008 270 242
- US-A1- 2009 031 427

## Description

### Technical Field

The present invention relates to an apparatus and a method for an advertisement service, and more particularly to an apparatus and a method for enforcing advertisement viewing before providing a service or content to a user.

### Background Art

In order to receive a multimedia service such as a broadcast service or an on-demand content transmission service, a device can basically connect to a content providing server, and can use the multimedia service. Accordingly, a user of the device is charged for the amount of time during which the device connects to the content providing server, or for the amount of data which is served to the user. As one of methods for solving such a charging problem, there is a service using a push method for unilaterally delivering an advertisement provided together with a service. The service associated with an advertisement as described above uses a method for first forcing the user of the device to view the advertisement and then providing the service to the user. Accordingly, the user can use the service at a low cost.

Meanwhile, a Digital Rights Management (DRM) technology is used to protect a multimedia service. This DRM which is a technology for protecting services or content from illegal distribution and deployment, has been developed to guarantee secure distribution of paid services or paid content and to prevent illegal distribution thereof. The DRM technology safeguards the rights and interests of service providers or content providers and prevents illegal copying, and comprehensively supports all operations from creation of services or content to distribution and management of the services or content, such as billing and payment.

As described above, the DRM technology used to protect services or content allows only devices of users, who have purchased fair rights by payment, to play the services or content. Accordingly, the DRM technology can grant a right capable of playing services or content in subordination to a particular device, and can also restrict the types of content items playable by the device and the number of times that each content item is playable thereby. However, a user intending to use a high-priced service or content can have a major concern about a reduction in the cost of the use of the service or content. Accordingly, a method for providing a multimedia service together with an advertisement can reduce the cost of the use of the multimedia service, so that the consumption of the multimedia service is expected to be expanded.

A function essential to provide the service as described above requires a method for performing a control operation for enabling a user to mandatorily view an advertisement provided together with a service. Accordingly, there is a need for a scheme capable of enforcing advertisement viewing. Also, due to a continuous extension and increase in multimedia services, advertisements in multimedia services can be variously implemented. Accordingly, an image advertisement can be typically provided together with a multimedia service. Also, a voice advertisement, a paper advertisement, and an advertisement implemented in a particular application such as a picture and a flash are introduced together with multimedia services. Accordingly, a scheme capable of supporting these various advertisements is required together with the introduction of these various advertisements.

US 2008/0270242 A1 discloses a system for providing content to multimedia devices where a rights object is required to enable use of provided content.

### Detailed Description of the Invention

### Technical Problem

Therefore, an aspect of the present invention is to provide an apparatus and a method for enforcing advertisement viewing before providing a multimedia service to a user.

Also, another aspect of the present invention is to provide an apparatus and a method capable of enforcing advertisement viewing in association with a DRM technology for protecting a multimedia service.

Further, another aspect of the present invention is to provide an apparatus and a method capable of enforcing viewing of different types of advertisements.

### Technical Solution

In accordance with an aspect of the present invention, there is provided a method for enforcing viewing of an advertisement in a device, which includes: determining whether a right object for the requested content includes information on mandatory advertisement viewing when a request for providing a content is made; detecting an advertisement associated with the requested content when the right object for the requested content includes the information on the mandatory advertisement viewing; playing the detected advertisement during a predetermined enforcement period; and providing the requested content when the playback of the advertisement is completed.

In accordance with another aspect of the present invention, there is provided a device for enforcing viewing of an advertisement, which includes: a multimedia player for transmitting a request for providing a content; and a digital right management (DRM) agent for determining whether a right object for the requested content includes information on mandatory advertisement viewing, detecting an advertisement associated with the requested content before delivering the detected advertisement to the multimedia player, when the right object for the requested content includes the information on the mandatory advertisement viewing, and delivering the requested content to the multimedia player when the multimedia player completes playback of the advertisement, wherein the multimedia player plays the advertisement during a predetermined enforcement period, and requests the DRM agent to provide the content when the playback of the advertisement is completed.

### Advantageous Effects

According to the present invention, by enabling a user to mandatorily view an advertisement before providing a multimedia service associated with an advertisement to the user, an advertiser can expect sufficient advertisement effect. Moreover, by enabling the user to view different types of advertisements, it is possible to maximize the advertisement effect. Also, the user forced to view the advertisements during a predetermined time period has an advantage in that the user can use a multimedia service at a low cost. Accordingly, it is possible to expect the effect of expanding a market of multimedia services.

### Brief Description of the Drawings

FIG. 1 is a block diagram showing the configuration of a system for providing a multimedia service associated with an advertisement, according to an embodiment of the present invention;
FIG. 2 is a view showing the structure of an enforcement period according to an embodiment of the present invention;
FIG. 3 is a flow diagram showing an operation between a multimedia player and a DRM agent, according to an embodiment of the present invention;
FIG. 4 is a flowchart showing an internal operation of a device, according to an embodiment of the present invention;
FIG. 5A and FIG. 5B are views illustrating a structure of a Right Object (RO) according to another embodiment of the present invention;
FIG. 6 is a view illustrating another structure of the RO as shown in FIGs. 5A and 5B; and
FIG. 7 is a view illustrating a structure of an RO according to still another embodiment of the present invention.

### Mode for Carrying Out the Invention

Hereinafter, exemplary embodiments of the present invention will be described in detail with reference to the accompanying drawings. It should be noted that in the accompanying drawings, the same elements will be designated by the same reference numerals although they are shown in different drawings.

Further, the following description includes specific details, and the specific details are only provided in order to help a more comprehensive understanding of the present invention. Therefore, it will be apparent to those having ordinary knowledge in the technical field of the present invention that the present invention can be practiced without these specific details. Also, in describing the present invention, a detailed description of publicly-known functions or configurations related to the present invention will be omitted when it is determined that the detailed description thereof may unnecessarily obscure the subject matter of the present invention.

In the following detailed description, exemplary embodiments in the present invention for solving the above technical problem will be proposed. Also, for convenience of description of the present invention, terms and names of technologies and entities defined in Digital Rights Management (DRM) of Open Mobile Alliance (OMA), which is a standards body of applications of mobile broadcasting, will be identically used to describe embodiments of the present invention. However, it goes without saying that these terms and names do not limit the scope of the present invention and an apparatus and a method according to embodiments of the present invention may be applied to systems having similar technical backgrounds.

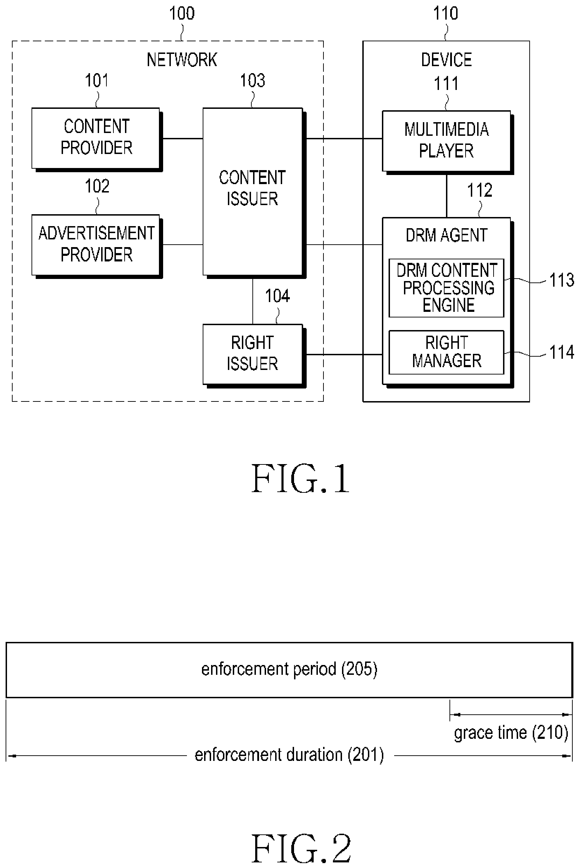

FIG. 1 is a block diagram showing the configuration of a system for providing a multimedia service associated with an advertisement, according to an embodiment of the present invention. Particularly, FIG. 1 illustrates entities participating in a method for enforcing advertisement viewing in association with a DRM technology for protecting a multimedia service. Also, in the present invention, services and contents that the DRM technology intends to protect, may be generally defined as multimedia services. Accordingly, although only a content provider and a content issuer are illustrated in FIG. 1, it goes without saying that the content provider and the content issuer may also serve as a service provider and a service issuer, respectively. Specifically, hereinafter, the content provider serves to provide content or a service. However, for convenience of description, a case will be described as an example where the content provider provides content.

Referring to FIG. 1, a network 100 includes a Content Provider (CP) 101 for providing content or a service, and an Advertisement Provider (AP) 102 for providing an advertisement.

The content provider 101 provides content to a Content Issuer (CI) 103, and the advertisement provider 102 provides an advertisement to the content issuer 103.

The content issuer 103 approves content in a system, to which the DRM technology is applied, and processes a request for providing content, which has been transmitted by a user. Also, the content issuer 103 selectively transmits, to a device 110 of the user, an encryption key necessary to play content encrypted according to an agreement with a Right Issuer (RI) 104 and a Right Object (RO) containing a right to play the content.

The content issuer 103 according to an exemplary embodiment of the present invention selects an advertisement to be transmitted together with content, and creates a content and advertisement package. The content and the advertisement may be simultaneously transmitted to the device 110 of the user, or may be transmitted to the device 110 of the user by different means.

The right issuer 104 registers and authenticates the device 110 of the user which is to use DRM, and generates and delivers an RO for content requested by the device 110 of the user. The right issuer 104 according to an exemplary embodiment of the present invention has a function capable of selecting an advertisement which is to be played together with the content requested by the device 110 of the user. Also, the right issuer 104 provides the information to the content issuer 103, and enables the content issuer 103 to create a content and advertisement package.

In an exemplary embodiment of the present invention, configuration information of the content and advertisement package may be provided by the content issuer 103 or the right issuer 104 after the content issuer 103 and the right issuer 104 mutually determine their roles according to a business agreement.

Meanwhile, the device 110 includes a multimedia player 111 and a DRM agent 112. The device 110 may be implemented in hardware, software, or a combination thereof. The device 110 refers to a device capable of consuming content that the network 100 provides by using the DRM technology.

The multimedia player 111 which is an entity capable of playing content and an advertisement, receives decrypted content or a decrypted advertisement from the DRM agent 112, and plays the received content or advertisement. Also, the multimedia player 111 receives encrypted content or an encrypted advertisement and a key capable of decrypting the content or advertisement from the DRM agent 112, decrypts the received content or advertisement, and then plays the decrypted content or advertisement.

The DRM agent 112 includes a DRM Content Processing Engine (DCPE) 113 and a Right Manager (RM) 114. According to a request for providing content, the DCPE 113 decrypts encrypted content or an encrypted advertisement and provides the decrypted content or advertisement to the multimedia player 111, and fetches a key to be used in a decryption process from the RM 114, for the decryption operation.

The RM 114 registers the device 110 in the right issuer 104, acquires an RO for content to be consumed by the device 110, and manages the consumption of the RO. The entities in the network 100 as shown in FIG. 1 may be different entities or complex entities, and the entities in the device 110 may also be different entities or complex entities.

An OMA DRM technology defines a technical specification called Right Expression Language (REL) in order to express an RO. In order to enable mandatory viewing of advertisements during a predetermined time period by using the REL, an embodiment of the present invention proposes a structure of an RO, as described below. Hereinafter, although general details described in the REL will be omitted, the details of the REL omitted in the present invention will follow the OMA DRM REL specification, and only details related to the present invention will be described herein.

In an embodiment of the present invention, a time period for mandatory advertisement viewing is defined as an "enforcement duration," and an example of an enforcement duration according to the expansion of a requirement model of the REL may be represented in Tables 1 to 3 below.

**Table 1**

| Element | <!ELEMENT o-ex:requirement (o-dd:tracked?, Odd:playout?)> |
|---|---|
| Semantics | As described in REL specification. |
| | The requirement element contains an optional playout element. |

Table 1 which represents "Element <requirements>," corresponds to a new definition of a requirement of the REL for an enforcement duration which is proposed in the present invention. Such a requirement is constructed from a Playout element as shown Table 2 below.

**Table 2**

| Element | <!ELEMENT o-ex:playout (o-dd:content reference?, o-dd:content metadata?)> |
|---|---|
| Semantics | The playout element specifies the (advertisement) content to be enforced played before permission is granted. |

Table 2 which represents "Element <playout>," defines that particular content indicated by a content reference element as shown in Table 3 below must be played during an enforcement duration of the content reference element as shown in Table 3 below. The "Element <playout>" serves to cause a user to view advertisements during a predetermined time period before the user views content that the user intends to actually watch.

**Table 3**

| Element | <!ELEMANT o-dd:content reference> |
|---|---|
| Semantics | The *content reference* element specifies the (advertisement) content to be enforced played. There are maybe multiple <content reference> elements in playout element. This element may contain the following attributes or elements: |
| | - content identifier (one or more, mandatory) |
| | - enforcement duration (absolute or relative, mandatory) |
| | - grace time (note that grace time can be the attribute of enforcement period, mandatory) |

Table 3 represents "Element <content reference>." The content reference element must play an advertisement indicated by a content identifier during an enforcement duration before the user uses desired content. Also, the content reference element displays, for a grace time, a right such that the DPCE 113 may send a request for a key, which is to be used to decrypt content, to the RM 114. In Table 3, the number of content identifiers as shown may be plural, the enforcement duration may be given an absolute time period or a relative time period, and the grace time may also be given an absolute time period or a relative time period.

Also, Table 4 below shows that the enforcement duration is represented in an RO by using an encapsulated REL.

**Table 4**

| |
|---|
| <play> |
| <requirement> |
| <asset> |
| <context> |
| <uid>AdvertisementContentID</uid> |
| </context> |
| <permission> |
| <play> |
| <constraint> |
| <enforcement_period> |
| <absolute>5 minutes</absolute> |
| <enforcement_period> |
| </constraint> |
| </play> |
| </permission> |
| </asset> |
| </requirement> |
| </play> |

Table 4 represents the description as shown in Table 1 to Table 3 by using a method called an encapsulated REL. In Table 4, <uid> plays the same role as the content identifier as shown in Table 3, and <enforcement period> plays the same role as the enforcement duration as shown in Table 3. <requirement>, <asset>, <context>, <permission>, <play> and <constraint> as shown in Table 4 are expressed in the REL.

Table 5 below shows a changed structure proposed in the present invention with respect to the <constraint>, which enables an execution during the enforcement period.

**Table 5**

| Element | <!ELEMENT o-ex constraint (o-dd count?, oma-dd timed-count?, o-dd datetime?, o-dd interval?, o-dd accumulated?, o-dd individual?, oma-dd system*, o-dd enforcement-period)> |
|---|---|
| Semantics | The <constraint> element is the topmost element in the constraint model It contains the optional <count>, <timed-count>, <datetime>, <interval>, <accumulated>, <individual>, <system> and <enforcement period> elements. The <constraint> element contains <system> elements only when its parent <permission> element contains the <export>, <play>, or <display> element. |

Table 5 represents "Element <constraint>."

FIG. 2 is a view illustrating the relation of the described enforcement duration, enforcement period and grace time. An enforcement duration 201 represents a state of a time period for mandatory playback of an advertisement, and includes an enforcement period 205 and a grace time 210. The enforcement period 205 represents a time period, during which an advertisement must be played. The grace time 210 represents a time period, during which the DPCE 113 may send a request for a key, which is to be used to decrypt content, to the right issuer 104 so that the content may be seamlessly played after playback of the advertisement.

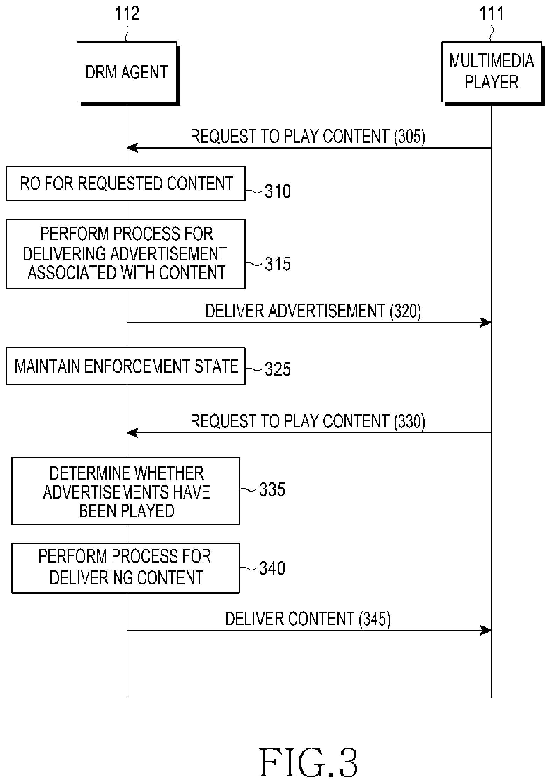

FIG. 3 is a flow diagram showing an operation between the DRM agent 112 and the multimedia player 111 after the device 110 receives an RO including the enforcement period as described in Table 1 to Table 5 and FIG. 2.

In step 305, the multimedia player 111 transmits a request to play content to the DRM agent 112 at the request of a user. Herein, content indicated by the request to play content is content which may be viewed after viewing of a particular advertisement. It is assumed in FIG. 3 that an RO including a right related to the content and information for enforcing viewing of a particular advertisement is already transmitted to the DRM agent 112. However, other than this, the RO may be received even after the user's request to play content.

In step 310, the DRM agent 112 identifies an RO for the requested content. Namely, the DRM agent 112 searches for and interprets the RO for the content indicated by the request to play content. The RO includes a restriction in which advertisement viewing must be enforced before the content indicated by the request to play content is provided. When the DRM agent 112 identifies this restriction, it performs a process for delivering an advertisement associated with the content, in step 315. Herein, a processing operation for delivering an advertisement signifies the decryption of the advertisement when the position of the advertisement is detected and the advertisement is encrypted.

Then, in step 320, the DRM agent 112 delivers the advertisement to the multimedia player 111. Accordingly, advertisement data is output to the multimedia player 111. It is assumed in FIG. 3 that an operation of decrypting an advertisement and content is performed by the DRM agent 112. However, the operation of decrypting an advertisement and content may also be performed by the multimedia player 111. In this case, the DRM agent 112 may provide the multimedia player 111 with a decryption key value which is to be used in the decryption process.

On the other hand, in step 325, the DRM agent 112 which has delivered the advertisement, maintains an enforcement state. Herein, the enforcement state which corresponds to maintaining of an 'enforcement' situation, signifies a situation in which the DRM agent 112 does not respond to a request of the multimedia player 111 even when the multimedia player 111 requests content in order to play the content. At this time, a time period for maintaining the 'enforcement' situation is provided to the RO for the content as an 'enforcement period.' The length of the 'enforcement period' is determined by the right issuer 104 or the content issuer 103 as shown FIG. 1.

Meanwhile, the multimedia player 111 which plays all of the advertisements provided by the DRM agent 112, transmits a request to play content to the DRM agent 112 in step 330. Then, in step 335, the DRM agent 112 identifies whether the advertisements have been played during a time period prescribed in the RO. In step 340, the DRM agent 112 performs an operation of providing the content requested by the multimedia player 111. The operation of providing the content signifies an operation of detecting the position of the content, securing the content and decrypting the content, or signifies an operation of providing an encryption key capable of decrypting the content when the content is decrypted by the multimedia player 111. In step 345, when the DRM agent 112 delivers the decrypted content to the multimedia player 111, the multimedia player 111 provides the content to the user.

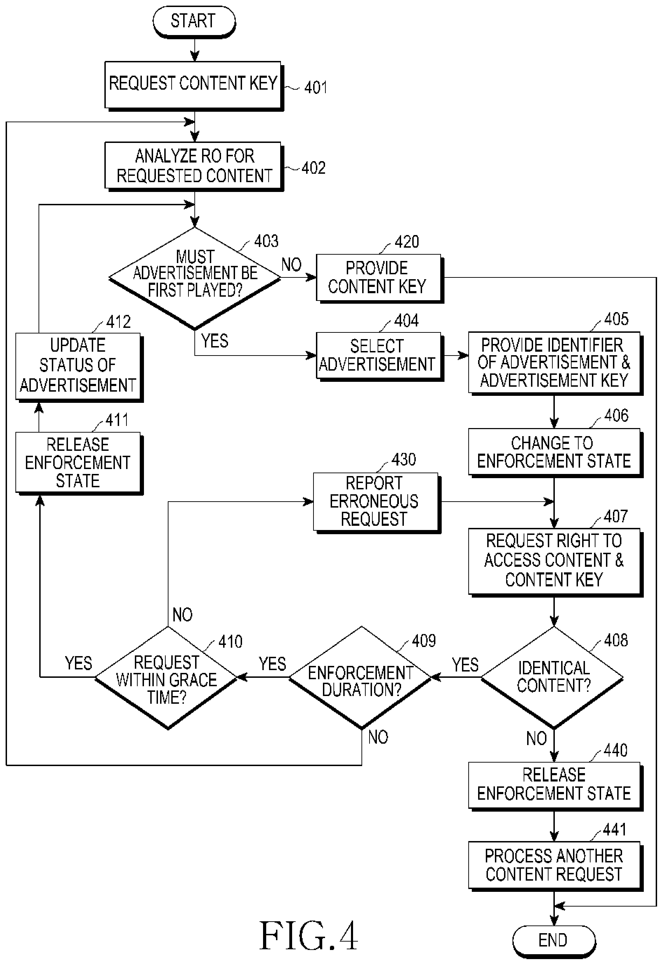

FIG. 4 shows an example of operation algorithms of the DRM agent 112 in the device 110 obtained by implementing a technology for enforcing advertisement viewing which is based on DRM proposed in the present invention.

In step 401, the DCPE 113 requests the RM 114 to transmit an encryption key for decrypting particular content. Namely, the DCPE 113 requests a content key from the RM 114. In step 402, the RM 114 interprets an RO for the requested content. Then, in step 403, the RM 114 performs an operation of determining whether viewing of an advertisement must be enforced before the consumption of the decrypted content.

When the RM 114 determines in step 403 that the requested content advertisement does not require advertisement consumption, the RM 114 provides a key capable of decrypting the content requested by the DCPE 113 to the DCPE 113, in step 420. When the RM 114 determines in step 403 that advertisement viewing must precede the playback of the requested content in order to play the requested content, the RM 114 selects an advertisement, which must be played before the playback of the content, in step 404. Then, in step 405, the RM 114 delivers an identifier of the selected advertisement and an encryption key for decrypting the advertisement, to the DCPE 113. In step 406, the RM 114 changes a mode to an enforcement state. In step 407, the DCPE 113 sends a request for a right to access content and an encryption key, which is to be used to decrypt content, to the RM 114. Herein, the encryption key which is to be used to decrypt content, is called a content key.

In step 408, the RM 114 determines whether the content requested by the DCPE 113 is identical to the content, for the decryption of which the encryption key has been requested by the DCPE 113 in step 401. When the RM 114 determines that the content requested by the DCPE 113 in step 407 is not identical to the content requested in step 401, the RM 114 proceeds to step 440, and releases the enforcement state maintained due to the content requested in step 401. Then, the RM 114 proceeds to step 441, and performs an operation on the content requested in step 407.

On the other hand, when the RM 114 determines in step 408 that the content indicated by the request received in step 407 is identical to the content requested in step 401, the RM 114 performs step 409. In step 409, the RM 114 determines whether an enforcement duration has elapsed. When the enforcement duration has elapsed, the RM 114 proceeds to step 402, and performs steps 403 and 420, so that the RM 114 provides an encryption key capable of decrypting the content requested by the DCPE 113.

Otherwise, when the RM 114 determines in step 409 that the enforcement duration has not elapsed, the RM 114 determines in step 410 whether the request is received during a grace period. When the request is received within the grace period, the RM 114 escapes from the enforcement state in step 411, and proceeds to step 412. In step 412, the RM 114 performs an update operation of changing a status of an advertisement related to the content to a viewing status. Then, the RM 114 performs steps 403 and 420, and provides a key necessary to play content.

On the other hand, when the RM 114 identifies in step 410 that the request is received during a time period other than the grace period, the RM 114 delivers a message such that an erroneous request has been made, to the DCPE 113 in step 430. FIG. 4 shows an operation of the DRM agent 112 described on the assumption that the DRM agent 112 manages all contents in only one enforcement state. When the DRM agent 112 manages a separate enforcement state for each of the contents, the DRM agent 112 may operate according to another algorithm. For example, operations in steps 408, 440 and 441 as shown FIG. 4 are not required.

Hereinafter, a structure of an RO according to another embodiment of the present invention will be described. An embodiment of the present invention as described above proposes the method capable of enforcing viewing of an advertisement in a case where the right issuer 104 or the content issuer 103 selects the particular advertisement and provides the particular selected advertisement together with content to the user.

Other than this, another embodiment of the present invention proposes a method capable of enforcing viewing of advertisements satisfying metadata after the right issuer 104 or the content issuer 103 provides the metadata enabling the selection of an advertisement. Accordingly, in order to acquire a right object or a key which is required to use content, a user of the device views advertisements, the number of which is set by the right issuer 104 or the content issuer 103 among multiple advertisements, during an enforcement duration.

In the following description, a detailed method, in which the right issuer 104 or the content issuer 103 provides metadata to the device 110 of the user, and details of the metadata are beyond a proposal of the present invention, and thus a detailed description of them will be omitted.

Hereinafter, Tables 6 to 9 below show an example of a configuration of an RO, which may enforce viewing of multiple advertisements according to the expansion of a requirement model prescribed in the REL.

**Table 6**

| Element | <!ELEMENT o-ex:requirement (o-dd:tracked?, odd:playout?)> |
|---|---|
| Semantics | As described in REL specification. The requirement element contains an optional playout element. |

Table 6 represents "Element <requirements>," and has a playout as shown in Table 7 below, as an element. Table 6 implies that the requirement must be satisfied in an RO including the requirement.

**Table 7**

| Element | <!ELEMENT o-ex:playout (o-dd:content reference?, o-dd:content metadata?)> |
|---|---|
| Semantics | The playout element specifies the (advertisement) content to be enforced played before permission is granted. |

Table 7 represents "Element <playout>," and a playout element enforces an ability to view advertisements, which are indicated by a content reference as shown in Table 8 below or content metadata as shown in Table 9 below, during a predetermined time period.

**Table 8**

| Element | <!ELEMENT o-dd:content reference CDATA "0"> |
|---|---|
| Semantics | The *content reference* element specifies the (advertisement) content to be enforced played. There are maybe multiple content |
| | reference elements in playout element. This element may contain the following attributes or elements: |
| | - **content identifier** (one or more, mandatory) |
| | - content representation (e.g. play, execute, etc.) |
| | - enforcement duration (previous proposal) |
| | - grace time |
| | - **minimum playout time per advertisement** |
| | - **maximum number of advertisements to be played out** |
| | - **accumulated playout time** (may include maximum and minimum values) |

Table 8 represents "Element <content reference>," and a content reference element includes advertisements, which have to be mandatorily viewed, and conditions of mandatory viewing of advertisements. The conditions of mandatory viewing of advertisements may include a minimum viewing time period per advertisement, namely, a time period enabling viewing of an advertisement of 30 seconds during a time period which is at least equal to or greater than a predetermined value, the number of advertisements which must be played during an enforcement duration, a time period for actually playing advertisements, etc. A reason for requiring the minimum viewing time period per advertisement is for increasing the effect of mandatory advertisement viewing in such a manner as to force a user to be able to view the selected advertisement during a time period which is at least equal to or greater than a predetermined value in an environment where the user may select an advertisement and may view the selected advertisement.

Also, the number of advertisements which must be played during an enforcement duration accurately presents the number of advertisements, which are to be mandatorily played during the enforcement duration, and is for enabling the device 110 of the user to mandatorily play as many advertisements as the number of relevant advertisements. A time period for actually playing advertisements is presented in order to force the user to actually view advertisements during a time period excluding a lot of overhead time required to select and play multiple advertisements.

**Table 9**

| Element | <!ELEMENT o-dd:content metadata CDATA "0"> |
|---|---|
| Semantics | The *content metadata* element contains the metadata that allows selection of the advertisements among available Advertisement DRM Contents and associated attributes. Content metadata should be identical to the content metadata present in OMA DCF container. |
| | This element may contain the following attributes (to be defined): |
| | - **content metadata or reference to ad pool (identifier of pool)** |
| | - content representation (e.g. play, execute, etc.) |
| | - enforcement duration (previous proposal) |
| | - grace time |
| | - **maximum number of advertisements** |
| | - **minimum playout time per advertisement** |
| | - **accumulated palyout time** (may include minimum and maximum values) |

Table 9 represents "Element <content metadata>," and a content metadata element serves to cause the right issuer 104 or the content issuer 103 to provide metadata enabling the selection of an advertisement, instead of directly presenting a list of advertisements which have to be mandatorily viewed. The content metadata element as shown in Table 9 is different from Table 8 in that the content metadata element provides metadata enabling the selection of an advertisement instead of a direct list of advertisements, differently from Table 8 and enables the device of the user to directly select an advertisement.

**Table 10**

| Element | <!ELEMENT o-ex:enforcement metadata (o-dd:**content reference**?, o-dd:**content metadata**?)> |
|---|---|
| Semantics | This element specifies enforcement duration for all contents referenced in child *content reference* or *content metadata* elements. This element may contain the following attributes or elements: |
| | - content representation (e.g. play, execute, etc.) |
| | - enforcement duration (previous proposal) |
| | - grace time |
| | - **maximum number of advertisements** |
| | - **minimum playout time per advertisement** |
| | - **accumulated playout time** (may include minimum and maximum values) |

Table 10 represents another method capable of executing mandatory viewing of an advertisement in the method for extending a REL as shown in Table 6 to Table 9, and shows enforcement metadata. Table 10 serves to define a separate element and provide conditions of mandatory viewing of advertisements determined by the content reference element or the content metadata element, instead of including the conditions of mandatory advertisement viewing in the content reference element as shown in Table 8 and the content metadata element as shown in Table 9.

Meanwhile, another embodiment of the present invention as described in Table 6 to Table 10 is represented by a method called an encapsulated REL, as in Tables 11 to 14 below.

**Table 11**

| |
|---|
| <context> |
| <metadata>AdvertisementContentMetadata</metadata> |
| </context> |

Table 11 represents a new element called metadata, and Table 10 serves to provide parameters enabling the selection of an advertisement.

**Table 12**

| |
|---|
| <constraint> |
| <enforcement period> |
| <maximum number of advertisements> |
| <minimum playout time per advertisement> |
| <accumulated playout time> |
| <enforcementperiod> |
| </constraint> |

Table 12 represents a subordinate element of an enforcement period, and proposes a minimum playback time period per advertisement, namely, a time period enabling playback of an advertisement of 30 seconds during a time period which is at least equal to or greater than a predetermined value, the number of advertisements which must be played during an enforcement duration, a time period for actually playing advertisements, and the like, which are proposed in another embodiment of the present invention. Accordingly, it is possible to view advertisements, the number of which is required among multiple advertisements.

**Table 13**

| Element | <!ELEMENT o-ex:constraint (o-dd:count?, oma-dd:timed-count?, o-dd:datetime?, o-dd:interval?, o-dd:accumulated?, o-dd:individual?, oma-dd:system*, o-dd:enforcement period)> |
|---|---|
| Semantics | This constraint element is the topmost element in the constraint model. It contains the optional count, timed-count, datetime, interval, accumulated, individual, system and enforcement period elements. The constraint element contains system elements only when its parent permission element contains the export, play, or display element. |

Table 13 represents "Element <constraint>," and shows a changed structure proposed in the present invention with respect to the <constraint> enabling the execution of the elements as shown in Table 12.

**Table 14**

| Element | <!ELEMENT o-dd:enforcement period CDATA "0"> |
|---|---|
| Semantics | The enforcement period may contain the following attributes: |
| | - maximum number of advertisements |
| | - minimum playout time per advertisement |
| | - accumulated playout time |

Table 14 represents "Element <enforcement period>," and is an example of an element representing an enforcement period.

As described above, in the present invention, the user is forced to view an advertisement provided together with a service, in association with the DRM technology for protecting a multimedia service. Accordingly, when the user applies for a multimedia service provided together with an advertisement, in order to enable mandatory playback of the advertisement before the use of the service, an RO enabling the use of the multimedia service is generated, and is then provided. The RO is delivered to a device which consumes the multimedia service. Then, the device which receives the RO, first displays the advertisement to the user before playing the multimedia service, according to the contents of the RO.

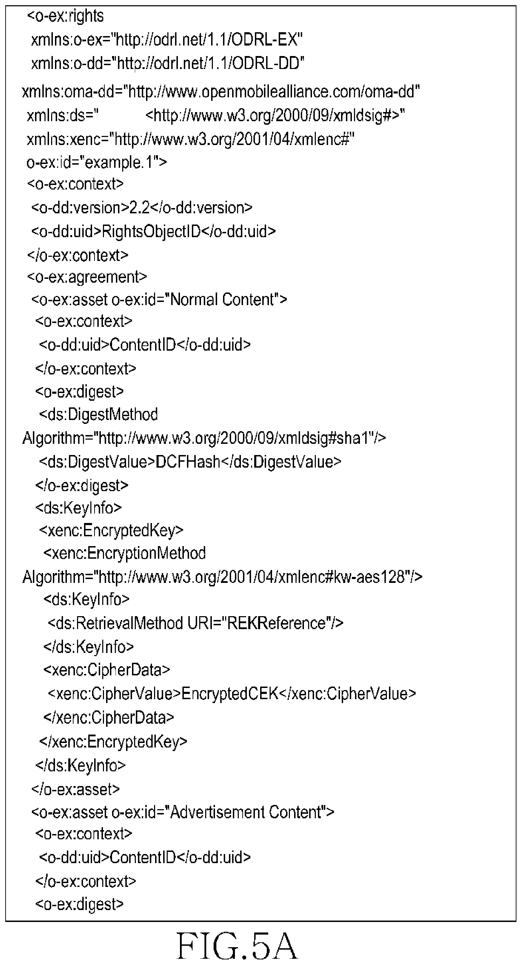

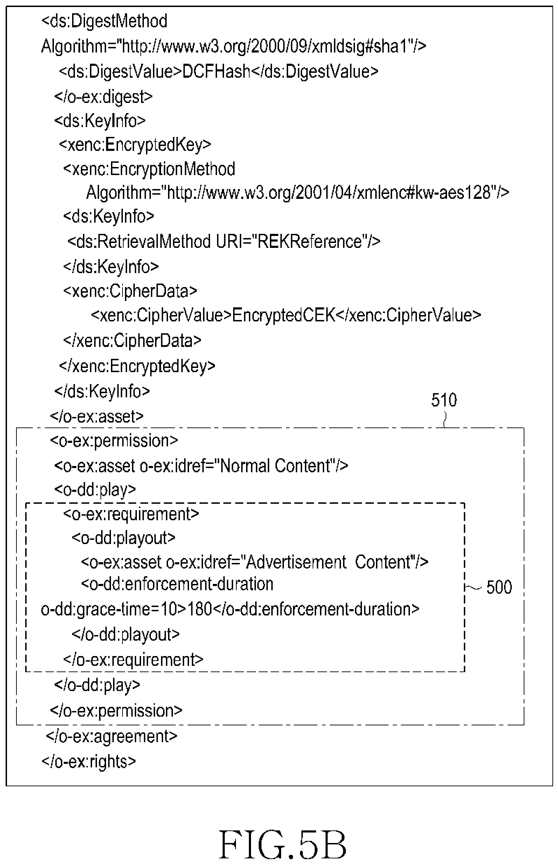

Meanwhile, as described above, the structure of an RO according to an embodiment of the present invention has been described. However, the structure of the RO as shown in FIG. 5A and FIG. 5B may also be defined. FIG. 5A and FIG. 5B are views illustrating a structure of an RO according to another embodiment of the present invention. FIG. 5B is a view concatenated with that of FIG. 5A. As in an embodiment of the present invention as described above, so in FIG. 5A and FIG. 5B, general details described in the REL will be omitted, and only details related to the present invention will be described herein.

Another embodiment of the present invention relates to a method capable of playing a particular advertisement without using a metadata part associated with advertisements, differently from an embodiment of the present invention.

First, referring to FIG. 5A, an OMA DRM RO begins with a most significant element named 'right,' and the 'right' element has sub-elements named 'context' and 'agreement.' Herein, the 'context' sub-element provides context information such as an identifier of the RO, a version of the used DRM and the like, and FIG. 5A shows an example where the identifier of the RO is 'RightsObjectID' and the version of the used DRM is '2.2.' Also, the 'agreement' sub-element is a sub-element which has an identifier of content used in accordance with the RO, information on the encryption/decryption of content, and details on a right for the content.

Next, referring to FIG. 5B, a 'permission' element sets the right scope of content associated with the RO, and is a subordinate element of the 'agreement' sub-element. As in an embodiment of the present invention, so in another embodiment of the present invention, the playback of an advertisement is enforced by adding an element named 'playout' to a requirement 500 corresponding to a subordinate element of the 'permission' element of the REL. An example of the requirement and that of the playout element according to another embodiment of the present invention are shown in Table 15 below and Table 16 below, respectively.

**Table 15**

| Element | <!ELEMENT o-ex:requirement (o-dd:tracked?, o-dd:playout?)> |
|---|---|
| Semantics | The <requirement> element contains optional <tracked> and <playout> elements. |
| | Requirements are associated with one permission element at a time. For a permission to be granted all its requirements MUST be fulfilled. If a requirement is not understood or cannot be enforced by the consuming Device the associated permission is invalid and MUST NOT be granted. |
| | If present, a <requirement> element SHOULD contain the <tracked> element. |
| | If a <requirement> element does not contain any element, it does not require any specific pre-condition to be fulfilled. |
| | The <requirement> element MUST only be present, as a child element to other permission elements such as <play> and <display>, it MUST NOT be present as a top-level requirement. If a DRM Agent receives an RO with a top-level requirement it MUST ignore this requirement. |

Table 15 represents "Element <requirement>," and has, as a factor, "Element <playout>" as shown in Table 16 below.

**Table 16**

| Element | <!ELEMENT o-dd:playout (o-dd:enforcement-duration, o-ex:asset+)> |
|---|---|
| Semantics | The <playout> element indicates that a specific DRM content (e.g. advertisement content) MUST be played before its parent permission can be exercised. |
| | It contains mandatory <enforcement-duration> element. |
| | The <asset> elements specified within the <playout> element allow linking of this requirement to the DRM content that must be played. |
| | It is possible to link <playout> element and its sibling elements to DRM Content referenced by <asset> elements contained in an <agreement> element. The link is established through the use of the "id" and "idref" attributes specified in sections 5.2.2.1 and 5.2.2.2. The associated <uid> element(s) specifies DCF content ID of the associated content. |

Table 16 represents "Element <playout>," and gives conditions such that content indicated by an element identifying content associated with an RO named an asset may be mandatorily played during a particular time period.

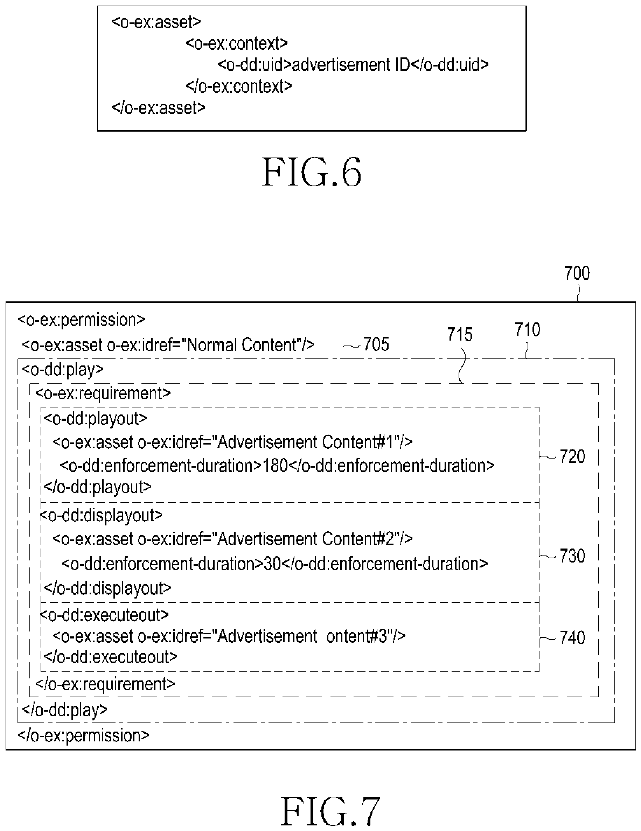

FIG. 6 illustrates another method other than a method for associating content with the playout element through the asset element as shown in Table 16. FIG. 6 illustrates a method which may be used in a case where advertisements which must be played have different ROs, respectively.

Meanwhile, Tables 17 and 18 below describe an example of the configuration of an 'enforcement duration' corresponding to a particular time period and 'grace time' corresponding to a time period for requesting a key, which is to be used to decrypt content, so that the content may be seamlessly played after playback of an advertisement, among the conditions such that content may be mandatorily played during the particular time period.

**Table 17**

| Element | <!ELEMENT o-dd:enforcement-duration(#PCDATA)> |
|---|---|
| Semantics | The attribute contains a positive integer value. It specifies the number of seconds associated content MUST be played. |

Another embodiment of the present invention relates to a method for designating a particular advertisement and enforcing viewing of the particular selected advertisement. Accordingly, in an embodiment of the present invention, an absolute time period or a relative time period is given as an enforcement duration. However, in another embodiment of the present invention, only an absolute time period is used instead of using such a relative time period. Accordingly, Table 17 shows an example of an enforcement duration in a case where an advertisement must be played for dozens of seconds as an absolute time period.

**Table 18**

| Element | <!ATTLIST o-dd:enforcement-duration odd:grace-time CDATA #REQUIRED> |
|---|---|
| Semantics | The attribute contains a positive integer value. It specifies the minimum period of time (in seconds) before enforcement-duration ends, when a new request to obtain parent permission SHALL be made by the Device. If the request is not made, associated permission MUST not be granted. |

Differently from an embodiment of the present invention, Table 18 also illustrates a case where an effective range of grace time is limited to a time point before the completion of an enforcement duration. For example, when an enforcement duration is 1 minute and grace time is 10 seconds, the next content may be requested on and after a time period of 50 seconds for mandatory advertisement viewing. Otherwise, when an enforcement duration is given as a relative value, namely, 80 % or 90 % of a time period for advertisement viewing as in an embodiment of the present invention, grace time may be applied from a time point on and after 80% or 90% in order to maximize a time period for a user's advertisement viewing.

As described above, the structure of an RO for enabling mandatory viewing of an advertisement during a predetermined time period has been described. However, another embodiment of the present invention proposes a structure of an RO for enabling mandatory viewing of different types of advertisements during a predetermined time period. A structure of an RO according to still another embodiment of the present invention is similar to the structure of the RO as shown in FIG. 5A and FIG. 5B. However, a 'permission' element 510 as shown in FIG. 5B is replaced by a 'permission' element 700 as shown in FIG. 7.

FIG. 7 shows an example of a 'permission' element of an RO proposed in a still another embodiment of the present invention. However, the configuration of the RO is not limited to this example, and thus, may be implemented in various methods. Also, FIG. 7 shows an example where the number of advertisements associated with content is 3 and three types of advertisements include an image advertisement, a text advertisement and an application advertisement. It goes without saying that the configuration of the number and types of these advertisements, and the like may be changed according to a business model.

The 'permission' element 700 as shown in FIG. 7 sets the right scope of content associated with the RO, and is a subordinate element of an 'agreement' sub-element. The 'permission' element 700 prescribes an operation range (for example, play, display, execute, and print) and restrictive conditions of content indicated by the RO. An 'asset' element 705 provides an identifier of the content associated with the RO, and is a sub-element of the 'permission' element.

A 'play' element 710 gives notice that the playback of content indicated by the 'asset' element 705 is permitted. At this time, only when the contents within a 'requirement' element 715 are satisfied before the 'play' element 710 is performed, the DRM agent provides decrypted content or decryption information enabling the decryption of content to the multimedia player. According to a still another embodiment of the present invention, the 'requirement' element 715 is used to combine different types of advertisements with content. The 'requirement' element 715 has subordinate elements named a 'playout' 720, a 'displayout' 730 and an 'executeout' 740.

Table 19 below shows an example of the 'requirement' element 715 proposed in the present invention. However, the present invention is not limited to this example.

**Table 19**

| Element | <!ELEMENT o-ex:requirement (o-dd:tracked?, **o-dd:playout?, o-dd:displayout?, o-dd:executeout**?,)> |
|---|---|
| Semantics | The <requirements> element contains an optional <tracked> element, **an optional <playout> element, an optional <displayout> element and an optional <executeout> element.** |
| | Requirements are associated with one permission element at a time. For a permission to be granted all its requirements MUST be fulfilled. If a requirement is not understood or cannot be enforced by the consuming Device the associated permission is invalid and MUST NOT be granted. |
| | If present, a <requirement> element SHOULD contain the <tracked> element. |
| | If a <requirement> element does not contain the <tracked> element, it does not require any specific pre-condition to be fulfilled. |
| | **If present, a <requirement> element SHOULD contain <playout> element, <displayout> element, or <executeout> element for advertisement control. The usage of <playout> element, <displayout> element, or <executeout> element depends on the kinds of advertisement. For example, if advertisement is AV content, then <playout> element is used, if advertisement is text or a graphic, then <displayout> element is used, and if advertisement is program or application, then <executeout> element is used.** |
| | The <requirement> element MUST only be present as a child element to other permission elements such as <play> and <display>, it MUST NOT be present as a top-level requirement. If a DRM Agent receives as RO with a top-level requirement it MUST ignore this requirement. |

Referring to Table 19, the 'requirement' element 715 may define, as described above, a method for playing an A/V-type advertisement, a method for playing a text or picture-type advertisement and a method for playing a program or application-type advertisement, and may include one or more methods each for playing an advertisement, for each type of advertisement.

As described above, the 'playout' element is one of methods each for playing an advertisement, for each type of advertisement, and serves to enable access to the right to enable playback of multimedia content associated with an A/V-type advertisement when the A/V-type advertisement has to be mandatorily viewed during a particular time period. Table 20 below shows an example of the 'playout' element.

**Table 20**

| Element | <!ELEMENT o-dd:playout (o-dd:enforcement-duration, o-ex:asset+)> |
|---|---|
| Semantics | **The <playout> element indicates that a specific DRM content (e.g. advertisement content) MUST be played before its parent permission can be exercised.** |
| | It contains mandatory <enforcement-duration> element. |
| | The <asset> elements specified within the <playout> element allow linking of this requirement to the DRM content that must be played. |
| | It is possible to link <playout> element and its sibling elements to DRM Content referenced by <asset> elements contained in an <agreement> element. The link is established through the use of the "id" and "idref" attributes specified. |

Table 20 represents "Element <playout>," and defines that advertisement content indicated by the 'asset' element within the 'playout' element 720 of FIG. 7 must be played during an 'enforcement duration' element. Namely, the 'playout' element 720 represents that the type of an advertisement is an A/V-type, and defines a minimum time period for playing the A/V-type advertisement. The 'playout' element 720 of FIG. 7 shows an example where content named "Advertisement Content#1" must be played for 180 seconds.

A 'displayout' element serves to first enforce viewing of a text, picture, or still image-type advertisement during a particular time period and then enable access to the right to enable playback of multimedia content associated with the advertisement. Table 21 below shows an example of the 'displayout' element.

**Table 21**

| Element | <!ELEMENT o-dd:displayout (o-dd:enforcement-duration, o-ex:asset+)> |
|---|---|
| Semantics | **The <displayout> element indicates that a specific DRM content (e.g. advertisement content) MUST be displayed before its parent permission can be exercised.** |
| | It contains mandatory <enforcement-duration> element. |
| | The <asset> elements specified within the <displayout> element allow linking of this requirement to the DRM content that must be played. |
| | It is possible to link <displayout> element and its sibling elements to DRM Content referenced by <asset> elements contained in an <agreement> element. The link is established through the use of the "id" and "idref" attributes specified. |

Table 21 represents "Element <displayout>," and defines that content indicated by the 'asset' element within the 'displayout' element 730 of FIG. 7 must be displayed during an 'enforcement duration' element. Namely, the 'displayout' element 730 represents that the type of an advertisement is a text or picture type, and defines a minimum time period for displaying the text or picture-type advertisement.

An 'executeout' element serves to enable access to the right to enable playback of multimedia content associated with the advertisement when a program or application-type advertisement has to be mandatorily viewed or used during a particular time period. Table 22 below shows an example of the 'executeout' element.

**Table 22**

| Element | <!ELEMENT o-dd:executeout (o-ex:asset+)> |
|---|---|
| Semantics | **The <executeout> element indicates that** a **specific DRM content (e.g. advertisement content) MUST be executed before its parent permission can be exercised.** |
| | The <asset> elements specified within the <executeout> element allow linking of this requirement to the DRM content that must be played. |
| | It is possible to link <executeout> element and its sibling elements to DRM Content referenced by <asset> elements contained in an <agreement> element. The link is established through the use of the "id" and "idref" attributes specified. |

Table 22 represents "Element <executeout>," and defines that an application-type advertisement indicated by the 'asset' element within the 'executeout' element 740 of FIG. 7 must be executed before the use of content. Namely, the 'executeout' element 740 represents that the type of an advertisement is an application type.

The 'executeout' element is different from the 'playout' element and the 'displayout' element in that the 'executeout' element does not include an 'enforcement duration.' This is because each of rich mediums such as applications or flashes has its own execution time period and thus, it is not necessary to set a separate time period for enforcing playback of an advertisement.

As described above, it is possible to enforce viewing of advertisements of various types by using the 'playout' element, the 'displayout' element and the 'executeout' element.

FIG. 7 which shows an example of an RO which uses the 'playout' element, the 'displayout' element and the 'executeout' element, will be described in detail. Referring to FIG. 7, in the 'requirement' element 715, the one 'playout' element 720 represents one A/V advertisement, the 'displayout' element 730 represents one text advertisement, and the 'executeout' element 740 represents one application A/V advertisement. The 'playout' element, the 'displayout' element and the 'executeout' element, may be used to designate the type of an advertisement. The number of advertisements of each type may be designated according to the number of the 'playout' element, that of the 'displayout' element, and that of the 'executeout' element. For example, in order to control 7 A/V advertisements, 2 text advertisements and 5 application advertisements, 7 'playout' elements, 2 'displayout' elements and 5 'executeout' elements may be prescribed in the 'requirement' element 715.

Also, it is assumed that the order of playing advertisements is determined by the order in which the 'playout' element, the 'displayout' element and the 'executeout' element are prescribed in the 'requirement' element 715. However, a separate method may be used. When the 'playout' element or the 'displayout' element is located at the lowest position in the 'requirement' element 715, it has 'gracetime' as an optional subordinate element, so that it may minimize a time period for playing content after playback of advertisements.

Meanwhile, in FIG. 3 which shows an operation flow between the DRM agent 112 and the multimedia player 111, when the DRM agent 112 receives an RO including the 'playout' element, the 'displayout' element and the 'executeout' element as described in Tables 19 to 22 and FIG. 7, an operation of the DRM agent 112 becomes different in the following respects. An RO according to the present invention not only includes the restriction of enforcing advertisement viewing before content is provided, but also reflects the type of an advertisement according to another embodiment of the present invention.

Accordingly, when the DRM agent 112 identifies an RO for the requested content in step 310 as shown in FIG. 3, it identifies not only the restriction of enforcing advertisement viewing but also the type of an advertisement, in the RO. For example, a 'requirement' element of the RO includes at least one of a 'playout' element for enforcing the playback of an A/V-type advertisement, a 'display' element for enforcing the display of a text or picture-type advertisement, and an 'executeout' element for enforcing the use of an application or rich media-type advertisement.

Accordingly, when the DRM agent 112 identifies that the RO includes this restriction and the type of an advertisement, it performs a process for delivering an advertisement associated with the content, in step 315. Accordingly, as a processing operation for delivering an advertisement to the multimedia player 111, the DRM agent 112 detects the type of an advertisement, the position of the advertisement, the number of advertisements of the relevant type, the order of playback, etc. When the advertisement is encrypted, the DRM agent 112 performs a decryption operation, etc.

Also, the DRM agent 112 which has delivered the advertisement, has a time period for maintaining an 'enforcement' situation, which becomes different according to a still another embodiment of the present invention in maintaining an enforcement state in step 325. The time period for maintaining the 'enforcement' situation is the sum of an 'enforcement duration' of all 'playout' elements, an 'enforcement duration' of all 'displayout' elements, and an execution time period of all applications indicated by an 'executeout' element.

Meanwhile, also in FIG. 4 which shows an example of an operation algorithm at the DRM agent 112 in the device 110, the operation of the device 110 becomes different in the following respects.

In step 404 as shown in FIG. 4, the RM 114 detects not only advertisements, which must be played before playback of content, but also types of the advertisements. At this time, the RM 114 also detects the order of playing the detected advertisements. At this time, the order of playing the advertisements may comply with the order defined in the 'requirement' element. Otherwise, for example, the order of playing the advertisements may comply with a method for giving a priority to the type of an advertisement, such as causing an application-type advertisement to be first played. However, the present invention is not limited to the order of playback. Accordingly, in step 405, the RM 114 delivers an identifier of an advertisement, which must be first played among the detected advertisements, and an encryption key for decrypting the advertisement to the DCPE 113.

Also, in step 410, the RM 114 determines whether the request has been received during a grace period. This determination operation becomes different in the following respects. According to a still another embodiment of the present invention, the grace period uses the value of a 'playout' element or a 'displayout' element located at the last position in a 'requirement' element. At this time, when an 'executeout' element is prescribed at the last position in the 'requirement' element, step 409 is not performed. Herein, because each of rich mediums such as applications or flashes has its own execution time period, a time period for enforcing playback of an advertisement is not designated. Accordingly, the operation in step 409 may be omitted.

In a state where it is assumed that an RO has a grace period, when a result of the determination in step 410 shows that the request has been received within the grace period, the RM 114 escapes from the enforcement state in step 411. An operation in remaining steps is the same as in FIG. 4 as described above.

## Claims

1. A method for enforcing advertisement viewing in a device, the method comprising:
determining (310) whether a Rights Object, RO, for the requested content includes information on mandatory advertisement viewing, when a request for providing a content is made, wherein the information on mandatory advertisement viewing comprises a predetermined enforcement period;
detecting (315) an advertisement associated with the requested content when the RO for the requested content includes the information on the mandatory advertisement viewing;
playing (325) the detected advertisement during the predetermined enforcement period (205), the predetermined enforcement period representing a time period during which an advertisement must be played before the requested content can be played;
providing (340) the requested content when the playback of the advertisement according to the predetermined enforcement period is completed.

2. The method as claimed in claim 1, wherein the RO for the requested content comprises at least one of:a right for the requested content;
an advertisement identifier associated with the requested content; and a playback method according to an advertisement type.

3. The method as claimed in claim 1 or 2, wherein the RO comprises at least one of:
a method for playing Audio/Video (A/V)-type advertisements;
a method for playing text or picture-type advertisements; and
a method for playing application-type advertisements.

4. The method as claimed in claim 3, wherein the method for playing the A/V-type advertisements and the method for playing the text or picture-type advertisements include a minimum time period for playing the A/V-type advertisements and a minimum time period for displaying the text or picture-type advertisements, respectively.

5. The method as claimed in one of claim 1 to 4, wherein detecting of the advertisement associated with the requested content comprises:
detecting a position of the advertisement associated with the requested content;
detecting an advertisement type; and
decrypting the advertisement when the advertisement is encrypted.

6. The method as claimed in one of claim 1 to 5, wherein the RO comprises at least one of:
a minimum playback time period per advertisement;
the number of mandatory advertisements played during the predetermined enforcement period; and
a time period for playing the advertisements.

7. A device (110) for enforcing advertisement viewing, the device comprising:
a multimedia player (111) configured to transmit a request for providing a content; and
a Digital Rights Management (DRM) agent (112) configured to determine whether a Rights Object, RO, for the requested content includes information on mandatory advertisement viewing, to detect an advertisement associated with the requested content before delivering the detected advertisement to the multimedia player (111), when the RO for the requested content includes the information on the mandatory advertisement viewing including a predetermined enforcement period, and to deliver the requested content to the multimedia player (111) when the multimedia player (111) completes playback of the advertisement according to the predetermined enforcement period,
wherein the multimedia player (111) plays the advertisement during the predetermined enforcement period, and requests the DRM agent to provide the content when the playback of the advertisement according to the predetermined enforcement period is completed and wherein the predetermined enforcement period represents a time period during which an advertisement must be played before the requested content can be played.

8. The device as claimed in claim 7, wherein the DRM agent comprises:
a rights manager configured to acquire and analyze the RO for the requested content; and
a DRM content processing engine configured to decrypt an advertisement associated with an encrypted content or the requested content and provide a decrypted advertisement to the multimedia player, according to the request for providing the content, and fetch a key to be used in the decryption process from the rights manager for the decryption operation.

9. The device as claimed in claim 7 or 8, wherein the RO comprises at least one of:
a right for the requested content;
an advertisement identifier associated with the requested content; and
a playback method according to an advertisement type.

10. The device as claimed in one of claim 7 to 9, wherein the RO comprises at least one of:
a method for playing Audio/Video (A/V)-type advertisements;
a method for playing text or picture-type advertisements; and
a method for playing application-type advertisements.

11. The device as claimed in claim 10, wherein the method for playing the A/V-type advertisements and the method for playing the text or picture-type advertisements includes a minimum time period for playing the A/V-type advertisements and a minimum time period for displaying the text or picture-type advertisements, respectively.

12. The device as claimed in one of claim 7 to 11, wherein the RO comprises at least one of:
a minimum playback time period per advertisement;
the number of the mandatory advertisements played during the predetermined enforcement period; and
a time period for playing the advertisements.

13. The device as claimed in one of claim 7 to 12, wherein, after the DRM agent detects a position of the advertisement associated with the requested content and detects an advertisement type, the DRM agent detects the advertisement associated with the requested content by decrypting the advertisement, when the advertisement is encrypted.

## Patentansprüche

1. Ein Verfahren zur zwangsweisen Anzeige von Werbeinhalten in einer Vorrichtung, wobei das Verfahren Folgendes umfasst:
Bestimmen (310), ob ein Rechteobjekt für einen angeforderten Inhalt Informationen zur zwangsweisen Anzeige von Werbeinhalten umfasst, wenn eine Anforderung zur Bereitstellung des Inhalts erfolgt, wobei die Informationen zur zwangsweisen Anzeige von Werbeinhalten einen zuvor bestimmten Erzwingungszeitraum umfassen;
Erfassen (315) eines Werbeinhalts im Zusammenhang mit dem angeforderten Inhalt, wenn das Rechteobjekt für den angeforderten Inhalt die Informationen zur zwangsweisen Anzeige von Werbeinhalten umfasst;
Wiedergeben (325) des erkannten Werbeinhalts während des zuvor bestimmten Erzwingungszeitraums (205), wobei der zuvor bestimmte Erzwingungszeitraum einen Zeitraum darstellt, während dessen ein Werbeinhalt wiedergegeben werden muss, bevor der angeforderte Inhalt wiedergegeben werden kann;
Bereitstellen (340) des angeforderten Inhalts, wenn die Wiedergabe des Werbeinhalts entsprechend dem zuvor bestimmten Erzwingungszeitraum abgeschlossen ist.

2. Das Verfahren nach Anspruch 1, wobei das Rechteobjekt für den angeforderten Inhalt zumindest ein Recht für den angeforderten Inhalt, eine Kennung für den Werbeinhalt im Zusammenhang mit dem angeforderten Inhalt und/oder ein Wiedergabeverfahren entsprechend einem Werbeinhaltstyp umfasst.

3. Das Verfahren nach Anspruch 1 oder 2, wobei das Rechteobjekt mindestens eines der folgenden Verfahren umfasst:
ein Wiedergabeverfahren für Werbeinhalte des Typs Audio/Video (A/V);
ein Wiedergabeverfahren für Werbeinhalte des Typs Text oder Bild; und
ein Wiedergabeverfahren für Werbeinhalte des Typs Anwendung.

4. Das Verfahren nach Anspruch 3, wobei das Wiedergabeverfahren für Werbeinhalte des Typs A/V und das Wiedergabeverfahren für Werbeinhalte des Typs Text oder Bild jeweils einen Mindestwiedergabezeitraum für die Werbeinhalte des Typs A/V und einen Mindestanzeigezeitraum für die Werbeinhalte des Typs Text oder Bild umfassen.

5. Das Verfahren nach einem der Ansprüche 1 bis 4, wobei die Erfassung des Werbeinhalts im Zusammenhang mit dem angeforderten Inhalt Folgendes umfasst:
Erfassen einer Position des Werbeinhalts im Zusammenhang mit dem angeforderten Inhalt;
Erfassen eines Werbeinhaltstyps; und
Entschlüsseln des Werbeinhalts, wenn der Werbeinhalt verschlüsselt ist.

6. Das Verfahren nach einem der Ansprüche 1 bis 5, wobei das Rechteobjekt mindestens eines der folgenden Elemente umfasst:
einen Mindestwiedergabezeitraum pro Werbeinhalt;
die Anzahl zwangsweise wiedergegebener Werbeinhalte während des zuvor bestimmten Erzwingungszeitraums; und
einen Zeitraum für die Wiedergabe der Werbeinhalte.

7. Eine Vorrichtung (110) zur zwangsweisen Anzeige von Werbeinhalten, wobei die Vorrichtung Folgendes umfasst:
eine Multimedien-Wiedergabevorrichtung (111), die eingerichtet ist, um eine Anforderung zur Bereitstellung eines Inhalts zu übertragen; und
einen Agenten zur Verwaltung digitaler Rechte (Digital Rights Management, DRM) (112), der eingerichtet ist, um zu bestimmen, ob ein Rechteobjekt für den angeforderten Inhalt Informationen zur zwangsweisen Anzeige von Werbeinhalten umfasst, um vor der Übermittlung eines erfassten Werbeinhalts an die Multimedien-Wiedergabevorrichtung (111) den Werbeinhalt im Zusammenhang mit dem angeforderten Inhalt zu erfassen, wenn das Rechteobjekt für den angeforderten Inhalt die Informationen zur zwangsweisen Anzeige von Werbeinhalten einschließlich eines zuvor bestimmten Erzwingungszeitraums umfasst, und um den angeforderten Inhalt an die Multimedien-Wiedergabevorrichtung (111) zu übermitteln, wenn die Multimedien-Wiedergabevorrichtung (111) die Wiedergabe des Werbeinhalts entsprechend dem zuvor bestimmten Erzwingungszeitraum abschließt,
wobei die Multimedien-Wiedergabevorrichtung (111) den Werbeinhalt während des zuvor bestimmten Erzwingungszeitraums wiedergibt und anfordert, dass der DRM-Agent den Inhalt bereitstellt, wenn die Wiedergabe des Werbeinhalts entsprechend dem zuvor bestimmten Erzwingungszeitraum abgeschlossen ist, und wobei der zuvor bestimmte Erzwingungszeitraum einen Zeitraum darstellt, während dessen ein Werbeinhalt wiedergegeben werden muss, bevor der angeforderte Inhalt wiedergegeben werden kann.

8. Die Vorrichtung nach Anspruch 7, wobei der DRM-Agent Folgendes umfasst:
eine Rechteverwaltungseinheit, die eingerichtet ist, um das Rechteobjekt für den angeforderten Inhalt zu erfassen und zu analysieren; und
eine DRM-Inhaltsverarbeitungseinheit, die eingerichtet ist, um einen Werbeinhalt im Zusammenhang mit einem verschlüsselten Inhalt oder dem angeforderten Inhalt zu entschlüsseln und der Multimedien-Wiedergabevorrichtung einen entschlüsselten Werbeinhalt entsprechend der Anforderung zur Bereitstellung des Inhalts bereitzustellen und um einen bei dem Entschlüsselungsprozess zu verwendenden Schlüssel für den Entschlüsselungsvorgang von der Rechteverwaltungseinheit abzurufen.

9. Die Vorrichtung nach Anspruch 7 oder 8, wobei das Rechteobjekt mindestens eines der folgenden Elemente umfasst:
ein Recht für den angeforderten Inhalt;
eine Kennung für den Werbeinhalt im Zusammenhang mit dem angeforderten Inhalt; und
ein Wiedergabeverfahren entsprechend einem Werbeinhaltstyp.

10. Die Vorrichtung nach einem der Ansprüche 7 bis 9, wobei das Rechteobjekt mindestens eines der folgenden Verfahren umfasst:
ein Wiedergabeverfahren für Werbeinhalte des Typs Audio/Video (A/V);
ein Wiedergabeverfahren für Werbeinhalte des Typs Text oder Bild; und
ein Wiedergabeverfahren für Werbeinhalte des Typs Anwendung.

11. Die Vorrichtung nach Anspruch 10, wobei das Wiedergabeverfahren für Werbeinhalte des Typs A/V und das Wiedergabeverfahren für Werbeinhalte des Typs Text oder Bild jeweils einen Mindestwiedergabezeitraum für die Werbeinhalte des Typs A/V und einen Mindestanzeigezeitraum für die Werbeinhalte des Typs Text oder Bild umfassen.

12. Die Vorrichtung nach einem der Ansprüche 7 bis 11, wobei das Rechteobjekt mindestens eines der folgenden Elemente umfasst:
einen Mindestwiedergabezeitraum pro Werbeinhalt;
die Anzahl der zwangsweise wiedergegebenen Werbeinhalte während des zuvor bestimmten Erzwingungszeitraums; und
einen Zeitraum für die Wiedergabe der Werbeinhalte.

13. Die Vorrichtung nach einem der Ansprüche 7 bis 12, wobei der DRM-Agent den Werbeinhalt im Zusammenhang mit dem angeforderten Inhalt erfasst, indem er den Werbeinhalt entschlüsselt, wenn der Werbeinhalt verschlüsselt ist, wobei dies nach der Erfassung einer Position des Werbeinhalts im Zusammenhang mit dem angeforderten Inhalt und der Erfassung eines Werbeinhaltstyps durch den DRM-Agenten erfolgt.

## Revendications

1. Un procédé d'application d'un visionnage d'annonces publicitaires dans un dispositif, le procédé comprenant :
la détermination (310) si un objet de droits, RO, pour le contenu demandé comprend des informations relatives à un visionnage d'annonces publicitaires obligatoire lorsqu'une demande de fourniture d'un contenu est effectuée, où les informations relatives à un visionnage d'annonces publicitaires obligatoire comprennent une période d'application prédéterminée,
la détection (315) d'une annonce publicitaire associée au contenu demandé lorsque le RO pour le contenu demandé comprend les informations relatives au visionnage d'annonces publicitaires obligatoire,
la diffusion (325) de l'annonce publicitaire détectée au cours de la période d'application prédéterminée (205), la période d'application prédéterminée représentant une période temporelle au cours de laquelle une annonce publicitaire doit être diffusée avant que le contenu demandé ne puisse être diffusé,
la fourniture (340) du contenu demandé lorsque la diffusion de l'annonce publicitaire en fonction de la période d'application prédéterminée est achevée.

2. Le procédé selon la Revendication 1, où le RO pour le contenu demandé comprend au moins un élément parmi : un droit pour le contenu demandé,
un identifiant d'annonce publicitaire associé au contenu demandé et un procédé de diffusion en fonction d'un type d'annonce publicitaire.

3. Le procédé selon la Revendication 1 ou 2, où le RO comprend au moins un procédé parmi :
un procédé de diffusion d'annonces publicitaires de type audio/vidéo (A/V),
un procédé de diffusion d'annonces publicitaires de type texte ou image, et
un procédé de diffusion d'annonces publicitaires de type application.

4. Le procédé selon la Revendication 3, où le procédé de diffusion des annonces publicitaires de type A/V et le procédé de diffusion des annonces publicitaires de type texte ou image comprennent une période temporelle minimale pour la diffusion des annonces publicitaires de type A/V et une période temporelle minimale pour l'affichage des annonces publicitaires de type texte ou image, respectivement.

5. Le procédé selon l'une quelconque des Revendications 1 à 4, où la détection de l'annonce publicitaire associée au contenu demandé comprend :
la détection d'une position de l'annonce publicitaire associée au contenu demandé,
la détection d'un type d'annonce publicitaire, et
le déchiffrement de l'annonce publicitaire lorsque l'annonce publicitaire est chiffrée.

6. Le procédé selon l'une quelconque des Revendications 1 à 5, où le RO comprend au moins un élément parmi :
une période temporelle de diffusion minimale par annonce publicitaire,
le nombre d'annonces publicitaires obligatoires diffusées au cours de la période d'application prédéterminée, et
une période temporelle pour la diffusion des annonces publicitaires.

7. Un dispositif (110) d'application d'un visionnage d'annonces publicitaires, le dispositif comprenant :
un lecteur multimédia (111) configuré de façon à transmettre une demande de fourniture d'un contenu, et
un agent de gestion de droits numériques (DRM) (112) configuré de façon à déterminer si un objet de droits, RO, pour le contenu demandé comprend des informations relatives à un visionnage d'annonces publicitaires obligatoire, à détecter une annonce publicitaire associée au contenu demandé avant la remise de l'annonce publicitaire détectée au lecteur multimédia (111), lorsque le RO pour le contenu demandé comprend les informations relatives au visionnage d'annonces publicitaires obligatoire comprenant une période d'application prédéterminée, et à remettre le contenu demandé au lecteur multimédia (111) lorsque le lecteur multimédia (111) achève la diffusion de l'annonce publicitaire en fonction de la période d'application prédéterminée,
où le lecteur multimédia (111) diffuse l'annonce publicitaire au cours de la période d'application prédéterminée et demande à l'agent DRM de fournir le contenu lorsque la diffusion de l'annonce publicitaire en fonction de la période d'application prédéterminée est achevée et où la période d'application prédéterminée représente une période temporelle au cours de laquelle une annonce publicitaire doit être diffusée avant que le contenu demandé ne puisse être diffusé.

8. Le dispositif selon la Revendication 7, où l'agent DRM comprend :
un gestionnaire de droits configuré de façon à acquérir et analyser le RO pour le contenu demandé, et
un moteur de traitement de contenus DRM configuré de façon à déchiffrer une annonce publicitaire associée à un contenu chiffré ou au contenu demandé et à fournir une annonce publicitaire déchiffrée au lecteur multimédia, en fonction de la demande de fourniture du contenu, et à rechercher une clé à utiliser dans le processus de déchiffrement auprès du gestionnaire de droits pour l'opération de déchiffrement.

9. Le dispositif selon la Revendication 7 ou 8, où le RO comprend au moins un élément parmi :
un droit pour le contenu demandé,
un identifiant d'annonce publicitaire associé au contenu demandé, et
un procédé de diffusion en fonction d'un type d'annonce publicitaire.

10. Le dispositif selon l'une quelconque des Revendications 7 à 9, où le RO comprend au moins un procédé parmi :
un procédé de diffusion d'annonces publicitaires de type audio/vidéo (A/V),
un procédé de diffusion d'annonces publicitaires de type texte ou image, et
un procédé de diffusion d'annonces publicitaires de type application.

11. Le dispositif selon la Revendication 10, où le procédé de diffusion des annonces publicitaires de type A/V et le procédé de diffusion des annonces publicitaires de type texte ou image comprend une période temporelle minimale pour la diffusion des annonces publicitaires de type A/V et une période temporelle minimale pour l'affichage des annonces publicitaires de type texte ou image, respectivement.

12. Le dispositif selon l'une quelconque des Revendications 7 à 11, où le RO comprend au moins un élément parmi :
une période temporelle de diffusion minimale par annonce publicitaire,
le nombre des annonces publicitaires obligatoires diffusées au cours de la période d'application prédéterminée, et
une période temporelle pour la diffusion des annonces publicitaires.

13. Le dispositif selon l'une quelconque des Revendications 7 à 12, où, après la détection par l'agent DRM d'une position de l'annonce publicitaire associée au contenu demandé et la détection d'un type d'annonce publicitaire, l'agent DRM détecte l'annonce publicitaire associée au contenu demandé par le déchiffrement de l'annonce publicitaire lorsque l'annonce publicitaire est chiffrée.
